# EUROPEAN PATENT APPLICATION

(11) **EP 4 470 863 A1**
(43) Date of publication of application: **04.12.2024**
(21) Application number: 22924023.9
(22) Date of filing: 25.10.2022
(51) Int. Cl.: B60W 40/08, B60W 30/02, B60W 50/00

(54) **VEHICLE INTEGRATION CONTROL DEVICE AND VEHICLE INTEGRATION CONTROL METHOD**

(30) Priority: 26.01.2022 JP 2022009975
(71) Applicant: Hitachi Astemo, Ltd., Ibaraki 312-8503 (JP)
(72) Inventor: SINGH Rathour Swarn, Tokyo 100-8280 (JP); MAEDA Kenta, Tokyo 100-8280 (JP); ITO Takahiro, Tokyo 100-8280 (JP); UENO Kentarou, Hitachinaka-shi, Ibaraki 312-8503 (JP)
(74) Representative: MERH-IP Matias Erny Reichl Hoffmann Patentanwälte PartG mbB
(86) International application number: PCT/JP2022/039691
(87) International publication number: WO 2023/145168

(57) **Abstract**

To provide a vehicle integration control device capable of controlling a posture of a vehicle so as to prevent in advance, a motion sickness for a plurality of occupants with different sensibilities to the motion sickness.

The vehicle integration control device includes: an occupant monitoring unit which monitors a plurality of occupants; a vehicle motion acquisition unit which acquires information about the current vehicle motion of a vehicle; a motion sickness prediction unit which predicts individual sensibilities of the respective occupants to a motion sickness resulting from the motion of the vehicle, based on the result of occupant monitoring by the occupant monitoring unit and the information on the vehicle motion acquired by the vehicle motion acquisition unit; a control target determination unit which integrates the motion sickness sensibilities of the respective occupants predicted by the motion sickness prediction unit and determines a control target based on a result of the integration; and a vehicle motion control unit which determines the contents of vehicle motion control based on the control target determined by the control target determination unit.

## Description

### Technical Field

The present invention relates to the configuration and control of a vehicle integration control device which controls a moving amount of a vehicle, and particularly to a technology of controlling a posture of the vehicle so as to improve the ride comfort of a plurality of occupants and prevent the onset of a motion sickness in the vehicle (motion sickness).

### Background Art

It is expected that a self-driving vehicle which is equipped with a futuristic reconfigurable riding space and does not require active control by a driver will evolve into a new living space for mankind. The rapid evolution of the self-driving vehicle changes road transport, thereby leading to improvements in hourly productivity and quality of life. Each occupant in the self-driving vehicle is expected to perform various activities (tasks) in the vehicle, such as reading books in the vehicle, usage of a smartphone, watching TV and movies on an on-vehicle monitor, talking with other occupants, etc.

On the other hand, it is difficult for the occupants in the self-driving vehicle to clearly grasp a driving situation and a driving scenario when performing the above-described activities in the vehicle. Therefore, the occupants cannot predict the behavior of the vehicle and are highly susceptible to a motion sickness. Further, the direction and magnitude of the vehicle motion, the frequency of rotational and translational vibrations, the seating orientation of the occupant, the condition of a road surface, etc. become factors that cause discomfort to the occupant, which may lead to the motion sickness.

It is expected that the severity and frequency of a motion sickness in the self-driving vehicle will increase as the occupants perform more activities other than driving. There is a possibility that the increase in the severity and frequency of the motion sickness will be an impediment to the widespread use of autonomous driving technology.

As a background art in the present technical field, there is known such a technology as disclosed in Patent Document 1, for example. Patent Document 1 discloses "an automatic driving vehicle which is capable of traveling by automatic driving according to a preset driving plan, and is equipped with a physical condition detecting means detecting the status of a motion sickness of an occupant in the vehicle, and an operation control means which performs automatic operation control according to the status of the motion sickness of the occupant".

### Citation List

### Patent Literature

Patent Literature 1: Japanese Unexamined Patent Application Publication No. 2012-59274

### Summary of Invention

### Technical Problem

In Patent Document 1 described above, motion sickness characteristic learning is performed which calculates a correlation value between a vehicle motion and a motion sickness by associating a self-report of having developed a motion sickness in a specific occupant (motion sickness) with vehicle motion information at that time (Paragraphs [0084] - [0086], etc. in Patent Document 1).

Further, in the case of a plurality of occupants, the maximum vehicle state correlation value (acceleration or the like) is extracted and the upper limit value of the vehicle behavior is set (Paragraphs [0095] - [0096], etc. in Patent Document 1).

However, Patent Document 1 shows learning control based on the self-report. In the learning control, the motion sickness of the occupant is predicted using a motion sickness estimation model after the occupant has already started to feel the motion sickness, and it is not possible to predict the motion sickness before developing the motion sickness.

Further, the motion sickness cannot be predicted for occupants who have not self-reported.

Therefore, it is an object of the present invention to provide a vehicle integration control device capable of controlling a posture of a vehicle so as to prevent in advance, a motion sickness for a plurality of occupants with different sensibilities to the motion sickness, and a vehicle integration control method using the same.

### Solution to Problem

In order to solve the above problems, a vehicle integration control device of the present invention includes: an occupant monitoring unit which monitors a plurality of occupants; a vehicle motion acquisition unit which acquires information about the current vehicle motion of a vehicle; a motion sickness prediction unit which predicts individual sensibilities of the respective occupants to a motion sickness resulting from the vehicle motion of the vehicle, based on the result of occupant monitoring by the occupant monitoring unit and the information on the vehicle motion acquired by the vehicle motion acquisition unit; a control target determination unit which integrates the motion sickness sensibilities of the respective occupants predicted by the motion sickness prediction unit and determines a control target based on a result of the integration; and a vehicle motion control unit which determines the contents of vehicle motion control based on the control target determined by the control target determination unit.

Further, a vehicle integration control method of the present invention includes the steps of: (a) monitoring a plurality of occupants; (b) acquiring information about a current vehicle motion of a vehicle; (c) predicting each occupant individual sensibility to a motion sickness of each occupant resulting from a vehicle motion, based on the result of occupant monitoring in the step (a) and the information about the vehicle motion obtained in the step (b); (d) integrating the motion sickness sensibilities of the respective occupants predicted in the step (c) and determining a control target based on the integrated result; and (e) determining the contents of vehicle motion control, based on the control target determined in the step (d).

### Advantageous Effects of Invention

According to the present invention, it is possible to realize a vehicle integration control device capable of controlling a posture of a vehicle so as to prevent in advance, a motion sickness for a plurality of occupants with different sensibilities to the motion sickness, and a vehicle integration control method using the same.

Thus, it is possible for each occupant to perform tasks according to occupant's needs while preventing the motion sickness for all occupants in advance.

Objects, configurations, and effects other than the above will be apparent from the description of the following embodiments.

### Brief Description of Drawings

Fig. 1 is a diagram showing the interior of an automatic driving vehicle equipped with reconfigurable seats according to an embodiment 1;
Fig. 2 is a diagram showing the manner of the interior of a vehicle on which a plurality of occupants performing various activities at various head orientations and gaze angles ride;
Fig. 3 is a diagram showing an overall outline of a vehicle integration control device according to the embodiment 1;
Fig. 4 is a diagram showing configuration examples of a passive occupant monitoring unit and a hybrid occupant monitoring unit according to the embodiment 1;
Fig. 5 is a diagram conceptually showing an algorithm for prediction of motion sickness sensibilities of a plurality of occupants according to the embodiment 1;
Fig. 6 is a flow chart showing the selection of a motion sickness sensibility index in a control target integration unit;
Fig. 7 is a flow chart showing the formulation of a minimized control cost function in the control target integration unit;
Fig. 8 is a diagram showing a driving scenario of navigating a self-vehicle carrying a plurality of occupants according to an embodiment 2 until it reaches a destination;
Fig. 9 is a diagram showing a driving scenario in which a driving action is selected based on motion sickness sensibilities of a plurality of occupants according to an embodiment 3;
Fig. 10 is a diagram showing the manner in which a plurality of occupants according to an embodiment 4 are performing various activities (task) unrelated to driving actions;
Fig. 11 is a diagram showing the manner in which a plurality of occupants according to an embodiment 5 are performing various activities (tasks) unrelated to driving actions; and
Fig. 12 is a diagram showing an occupant unrelated to a driving action according to an embodiment 6 and an on-vehicle monitor for reducing motion sickness sensibility.

### Description of Embodiments

Hereinafter, embodiments of the present invention will be described with reference to the drawings. Note that in each drawing, the same configurations are denoted by the same reference numerals, and detailed descriptions of overlapping parts will be omitted.

### Embodiment 1

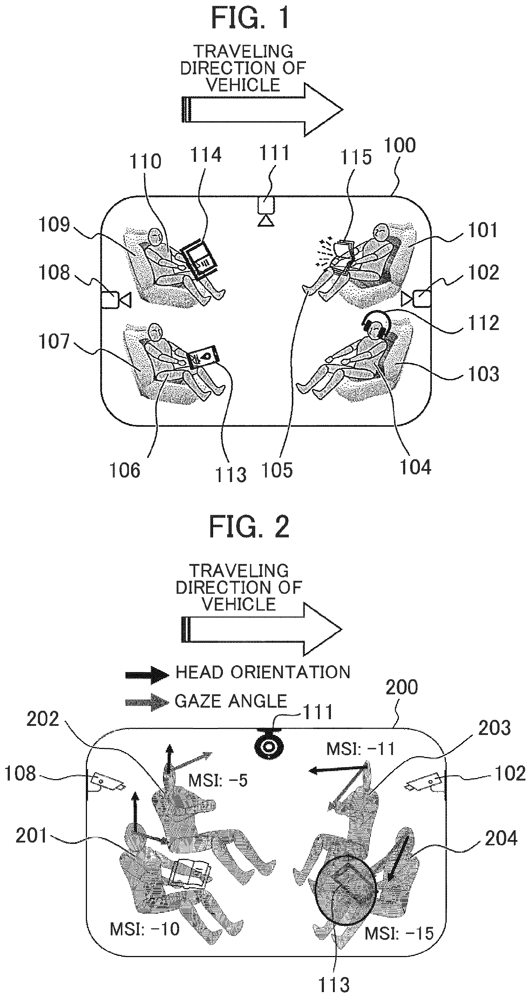

A vehicle integration control device and a vehicle integration control method according to the embodiment 1 of the present invention are described with reference to Fig. 1 to Fig. 7.

Fig. 1 is a diagram showing the interior of an automatic driving vehicle equipped with reconfigurable (seat position freely adjustable) seats 101, 103, 107, and 109. The orientation of the seat can be changed depending on an occupant request. In Fig. 1, the vehicle interior is shown with four seats for four persons, but the number of seats varies depending on the model and type of a vehicle 100, and is not necessarily limited to this.

A multiple-occupants monitoring units 102, 108, and 111 are also installed in the vehicle interior. Although Fig. 1 illustrates three sensors for occupant monitoring as multiple-occupants monitoring units, the number of multiple-occupants monitoring units can vary depending on user requests.

The multiple-occupants monitoring units 102, 108, and 111 can measures various attributes such as an occupant 105 reading a book 115, an occupant 104 listening to music on a headphone 112, an occupant 106 using a smartphone 113, an occupant 110 using a portable tablet 114, etc.

The main purpose of the multiple-occupants monitoring units is to detect all attributes related to the occupants required to predict the occupants' motion sickness (motion sickness) sensibility in the vehicle. For example, as occupant activities, the multiple-occupants monitoring unit may detect that the occupant 105 is reading the book 115 and may also detect the movement and orientation of a head of an occupant and the occupant viewing angle during performing activity.

Note that the attributes and means of the occupants described above are examples and are not limited to these. For example, a wearable sensor worn by an occupant may be used to detect an occupant's condition. Further, it is also possible to detect the posture of the occupant by installing a sensor on a seat belt (not shown) and detecting the tension of the seat belt. It is also possible to detect the seating posture of the occupant using a pressure sensor or the like built into the seat. In addition, it is also possible for the occupant to input his or her own status (activity, posture, head orientation, etc.) using a Human Machine Interface (HMI) unit.

Fig. 2 is a diagram showing the manner of the interior of a vehicle on which a plurality of occupants 201, 202, 203, and 204 performing various activities at various head orientations and gaze angles ride. Fig. 2 shows sample values of motion sickness incidence rates (MSI) as examples of the likelihood of developing the motion sickness (motion sickness sensibility) in order to understand the predicted motion sickness of each occupant (hereinafter referred to as "motion sickness"). The higher the absolute value of MSI, the more likely it is to develop the motion sickness.

As shown in Fig. 2, the MSIs of the occupants 201, 202, 203, and 204 are -10, -5, -11, and -15, respectively. Therefore, the occupant 204 using the smartphone 113 and facing backward (direction opposite to the traveling direction of a vehicle 200) is most likely to develop the motion sickness.

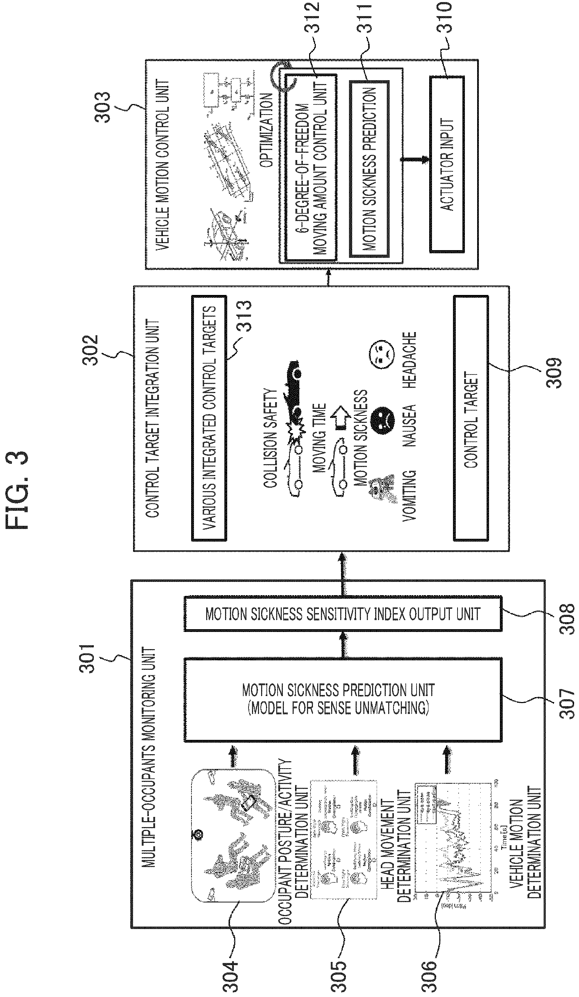

Fig. 3 is a diagram showing the overall outline of the vehicle integration control device of the present embodiment. As shown in Fig. 3, the vehicle integration control device of the present embodiment includes as main components, three modules, that is, a multiple-occupants monitoring unit 301 which predicts the motion sickness sensibility of each occupant, a control target integration unit 302 which integrates various targets to find optimal control targets for a plurality of occupants, and a vehicle motion control unit 303 which controls a vehicle motion based on a control target 309 integrated by the control target integration unit 302. The multiple-occupants monitoring unit 301 corresponds to the multiple-occupants monitoring units 102, 108, and 111 in Figs. 1 and 2.

The multiple-occupants monitoring unit 301 includes five subunits, that is, an occupant posture/activity determination unit 304 which determines a posture and activity of an occupant, a head movement determination unit 305 which determines the movement, orientation and gaze angle of an occupant head, a vehicle motion determination unit 306 which determines a vehicle motion, a motion sickness prediction unit 307 which predicts a motion sickness of a plurality of occupants using a sense mismatch model or the like, and a motion sickness sensibility index output unit 308.

The multiple-occupants monitoring unit 301 uses various occupant attributes and vehicle motion to predict motion sickness sensibilities of the multiple occupants.

The control target integration unit 302 obtains and integrates motion sickness sensibility indices of the individual occupants to calculate various integrated control targets 313 and estimates a final control target 309. Further, in order to derive the control target 309, the control target integration unit 302 can also use a plurality of other vehicle performance control targets such as collision safety and moving time and integrate the motion sickness sensibility index output from the motion sickness sensibility index output unit 308 with them to estimate a versatile control target 309.

The vehicle motion control unit 303 obtains the estimated control target 309 and derives a vehicle motion that can limit or reduce the control target 309 estimated based on motion sickness prediction 311 and vehicle motion. The optimized vehicle motion is ultimately used to generate an actuator input 310.

The 6-degree-of-freedom moving amount control unit 312 of the vehicle motion control unit 303 controls the attitude angles of the vehicle (roll angle, pitch angle, yaw angle, angle in front-rear direction, angle in left-right direction, and vertical angle) so that the 6-axis momentum of the vehicle (roll rate, pitch rate, yaw rate, longitudinal acceleration, horizontal acceleration, and vertical acceleration) is minimized at a position where the control object exists.

Each unit described above will be described in detail below.

### [Multiple-Occupants Monitoring Unit 301]

The multiple-occupants monitoring unit 301 includes one or more sensors capable of detecting at least any of various occupant attributes such as occupant activity, a visual line, a gaze angle, a head movement, a head orientation, and a posture, a vehicle seat orientation, and a vehicle interior configuration. The sensors used for occupant monitoring may be comprised of one or more cameras or the like in a monocular or stereo configuration. These sensors are not limited only to the cameras, but may also include LiDAR, a seat-embedded pressure/weight sensor, an occupant-mounted wearable sensor such as a smartwatch, a smartphone or the like, a seatbelt tension sensor, etc.

Further, even when a camera is used for the multiple-occupants monitoring unit 301, it can have multiple variations as in an infrared camera, a thermal camera capable of detecting heat, a fisheye camera (360-degree camera), a panorama camera, and the like, for example, and can be used to detect required occupant attributes.

The occupant monitoring unit equipped with such active sensors as described above to detect occupant attributes required for motion sickness prediction is referred to as an "active occupant monitoring unit".

However, in some cases, the occupants can also input their own information via the human machine interface (HMI) unit provided in the vehicle. Such a system is called a "passive occupant monitoring unit". The passive occupant monitoring unit allows all occupants to enter information about the occupant's own status (occupant activity, head movement, head orientation, gaze angle, seat orientation, posture, etc.) individually or in a group.

Alternatively, depending on the case, the active occupant monitoring unit and the passive occupant monitoring unit may be combined to configure a hybrid occupant monitoring unit.

In the case of the hybrid occupant monitoring unit, the active occupant monitoring unit can detect most of the required occupant attributes. However, in such a case that some required occupant attributes cannot be detected, the occupant monitoring unit may ask the required occupant to input the required attributes.

Therefore, the multiple-occupants monitoring unit 301 can have three variations of the active occupant monitoring unit, the passive occupant monitoring unit, and the hybrid occupant monitoring unit. The configurations of all the occupant monitoring units described above can be combined in various ways so as to meet user requirements.

### [Motion Sickness Prediction Unit 307]

The motion sickness prediction unit 307 acquires the respective outputs of the occupant posture/activity determination unit 304, the head movement determination unit 305, and the vehicle motion determination unit 306 to predict the sensibility of each individual occupant to the motion sickness. The motion sickness prediction unit 307 can use a learning model such as a 6-degree-of-freedom subjective vertical competitive motion sickness model or a sense mismatch model to predict the sensibility of the motion sickness of each individual occupant.

Also, the motion sickness prediction unit 307 can use the detected occupant status (occupant activity, head movement, head orientation, gaze angle, seat orientation, posture, etc.) to estimate vehicle motion perceived by each occupant for the purpose of predicting the sensibility of the motion sickness. When it is difficult to estimate the vehicle motion perceived by the occupant, the motion sickness prediction unit 307 detects the motion of the own vehicle and can use it for prediction of the motion sickness sensibility.

Further, the motion sickness prediction unit 307 can also label the motion sickness sensibility of each occupant in motion sickness symptoms such as nausea, nausea episodes, headaches, headache episodes, vomiting, vomiting episodes.

In addition, the motion sickness prediction unit 307 can also use one or more detected occupant attributes for motion sickness prediction.

### [Motion Sickness Sensibility Index Output Unit]

The motion sickness sensibility index output unit 308 converts the individual occupant's sensibility to the motion sickness predicted by the motion sickness prediction unit 307 into a motion sickness sensibility index such as a motion sickness incidence (MSI) and outputs the same to the control target integration unit 302.

### [Control Target Integration Unit 302]

The control target integration unit 302 uses the individual occupant motion sickness sensibilities predicted by the motion sickness prediction unit 307 to integrate and estimate control targets that can limit or reduce the motion sickness sensibilities of the plurality of occupants.

Also, the control target integration unit 302 can select an occupant who is likely to develop the motion sickness as an object to be controlled.

Further, since the control target integration unit 302 can use a rule-based model to estimate the control target. Therefore, if the predicted motion sickness sensibility of occupant is such that one occupant is in a state of being likely to experience vomiting, while the other occupant is in a state where the other occupant feels only a mild headache, the occupant who is likely to experience vomiting is selected as the control target.

In some cases, when all occupants feel the same degree of motion sickness, the average value of the motion sickness sensibilities of all occupants can also be considered to be a control target.

Further, the occupant motion sickness sensibility as the control target is integrated with vehicle performance control objects such as collision safety, a moving time, etc. to enable the formulation of a minimized control cost function that can limit the occupant motion sickness sensibility and the required vehicle performance.

### [Vehicle Motion Control Unit 303]

The vehicle motion control unit 303 obtains the output of the control target integration unit 302 to estimate vehicle motion and reduce or limit the control target.

The 6-degree-of-freedom moving amount control unit 312 of the vehicle motion control unit 303 uses the control target 309 to estimate the roll rate, pitch rate, yaw rate, longitudinal acceleration, horizontal acceleration, and vertical acceleration (heave motion) which are the 6-axis momentum of the vehicle.

These estimated vehicle motions are used to derive actuator inputs 310 such as a suspension stroke, a brake command, a throttle command, a steering command, etc., which are required.

In some cases, the output of the control target integration unit 302 can also be used to estimate each individual occupant posture and limit the motion sickness sensibility. In such a case, each individual active suspension or seat actuator installed to act with being limited to a specific occupant can be actuated to mitigate the occupant's likelihood of developing the motion sickness.

Further, the vehicle motion control unit 303 can notify the occupant to prepare for unpleasant vehicle motion when adverse conditions are assumed for vehicle traveling. For example, since occupant comfort is not guaranteed when sudden braking is applied to avoid a collision, the vehicle motion control unit 303 notifies all occupants of a sudden dynamic change.

Similarly, when the occupant is engaged in non-driving-related tasks, and the multiple-occupants monitoring unit 301 fails to correctly recognize vehicle motion which leads to the motion sickness, the on-vehicle monitor can be used to display the situation outside the vehicle (driving scenario) in addition to the vehicle driving behaviors which is the intended motion.

Further, when the automatic driving vehicle supports multiple driving modes such as a lane change driving mode, an autonomous lane maintenance driving mode, adaptive cruise control, a traffic congestion driving mode, a highway driving mode, etc., the output of the control target integration unit 302 can be used to select an automatic driving mode.

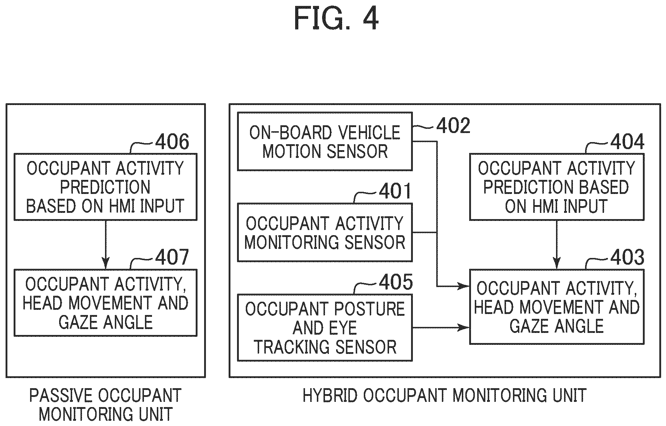

Fig. 4 is a diagram showing a configuration example of the above-described passive occupant monitoring unit and hybrid occupant monitoring unit.

As shown in the left diagram of Fig. 4, the passive occupant monitoring unit allows all occupants to enter status information required to estimate the motion sickness sensibility. Based on the activity prediction input by each occupant using the human machine interface (HMI) (HMI input 406), information 407 such as the occupant activity, head movement, gaze angle, and the like is used to estimate motion sickness sensibilities of all occupants.

On the other hand, as shown in the right diagram of Fig. 4, in the hybrid occupant monitoring unit including the active occupant monitoring unit, on-vehicle sensors such as an occupant activity monitoring sensor 401, an on-board vehicle motion sensor 402, an occupant posture and eye tracking sensor 405, etc. are used to detect an occupant status. The hybrid occupant monitoring unit is configured by using both measured outputs of the active sensors such as the occupant activity monitoring sensor 401, the on-board vehicle motion sensor 402, the occupant posture and eye tracking sensor 405, etc., and a human machine interface-based input (HMI input 404). Based on all these information, the motion sickness prediction unit 307 uses information 403 such as the occupant activity, head movement, gaze angle, etc. to estimate the motion sickness sensibility of the occupant.

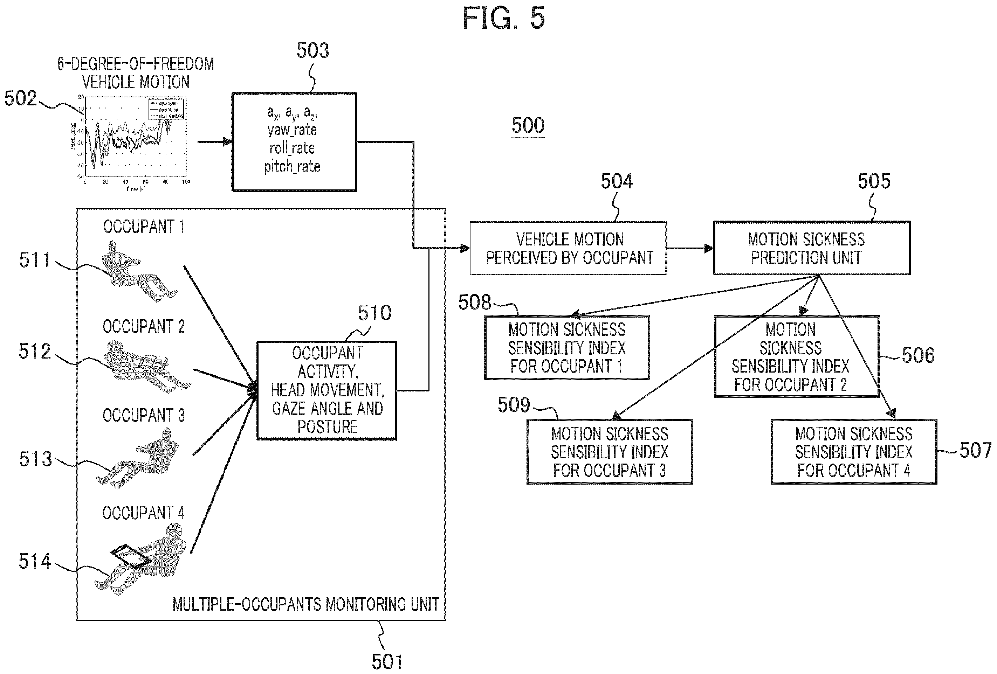

Fig. 5 is a diagram conceptually showing an algorithm 500 for motion sickness sensibility prediction for a plurality of occupants.

A multiple-occupants monitoring unit 501 acquires measured multiple occupant attributes 511 to 514 in addition to 6-degree-of-freedom vehicle motion 502.

A vehicle motion acquisition unit 503 extracts 6-degree-of-freedom vehicle motion attributes such as a longitudinal acceleration aₓ, a horizontal (lateral) acceleration a_{y}, a vertical acceleration (heave motion) a_{z}, a yaw rate, a roll rate, and a pitch rate, etc., and integrates them with the occupant attributes acquired by the multiple-occupants monitoring unit 501 (information 510 such as the occupant activity, head movement, gaze angle and posture, and the like) to estimate vehicle motion 504 perceived by each occupant.

A motion sickness prediction unit 505 estimates and outputs individual motion sickness sensibility indices 506 to 509 for all occupants based on the vehicle motion 504 perceived by the occupant.

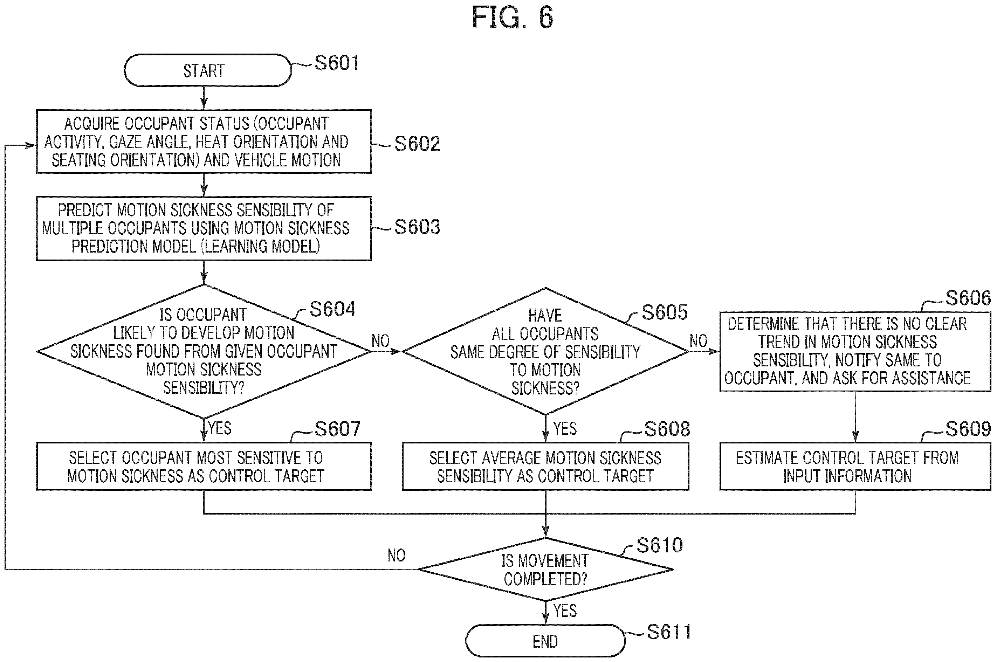

Fig. 6 is a flow chart showing the selection of the motion sickness sensibility index as a control target when the motion sickness sensibility indices for all occupants are given in the control target integration unit 302.

When the vehicle is switched on (Step S601), in Step S602, the multiple-occupants monitoring unit 301 acquires information about the status of the occupants, such as the occupant activity, gaze angle, head orientation, seating orientation, etc., and information about the vehicle motion.

Next, in Step S603, the multiple-occupants monitoring unit 301 uses a motion sickness prediction model (learning model) such as a 6-degree-of-freedom subjective vertical competitive motion sickness model or a sense mismatch model or the like to predict the motion sickness sensibilities for multiple occupants.

Subsequently, in Step S604, the control target integration unit 302 searches for occupants who are likely to develop the motion sickness, based on the motion sickness sensibility indices of all the occupants given from the multiple-occupants monitoring unit 301. When the occupant likely to develop the motion sickness is found (Yes), the occupant most sensitive to the motion sickness is selected as the control target (Step S607) .

On the other hand, when no occupants likely to develop the motion sickness (No) are found (No), the control target integration unit 302 proceeds to Step S605, where it determines whether or not all the occupants have the same degree of motion sickness sensibility. When it is determined that all the occupants have the same degree of motion sickness sensibility (Yes), the motion sickness sensibilities of all the occupants are averaged and the average motion sickness sensibility is selected as the control target (Step S608).

When it is determined that the motion sickness sensibility of each occupant is different (not the same degree) (No), the control target integration unit 302 proceeds to Step S606, where it is determined that there is no clear trend in motion sickness sensibility for all the occupants. The control target integration unit 302 notifies it to each occupant and requests assistance in inputting information about the occupant via the human machine interface (HMI) unit or the like. Then, the control target is estimated based on the information input from the HMI unit or the like (Step S609).

Finally, in Step S610, it is determined whether or not the movement by the vehicle has been completed, that is, whether or not the vehicle has reached the destination set by the occupant. When it is determined that the movement has been completed (Yes), the processing in the control target integration unit 302 is terminated (Step S611). When it is determined that the movement has not been completed (No), the processing returns to Step S602 to repeat the processing after Step S602.

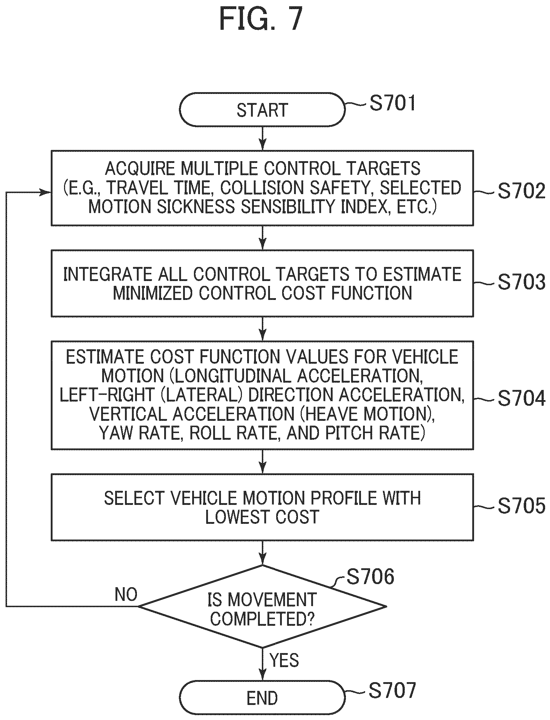

Fig. 7 is a flow chart showing formulation of a minimized control cost function which can achieve the control target.

When the control target integration unit 302 detects a switch-on signal of the vehicle, it starts the processing of formulating the minimized control cost function (Step S701).

First, in Step S702, the control target integration unit 302 acquires a plurality of control targets such as a travel time, collision safety, a selected motion sickness sensibility index, etc.

Next, in Step S703, all the acquired control targets are integrated to estimate the minimized control cost function.

Subsequently, in Step S704, the estimated minimized control cost function is used to estimate cost function values for the 6-degree-of-freedom vehicle motion (the longitudinal acceleration aₓ, horizontal (lateral) acceleration a_{y}, vertical acceleration (heave motion) a_{z}, yaw rate, roll rate, and pitch rate) acquired in the vehicle motion acquisition unit 503.

Next, in Step S705, a vehicle motion profile with the lowest cost is selected.

Finally, in Step S706, it is determined whether or not the movement by the vehicle has been completed, that is, whether or not the vehicle has reached the destination set by the occupant. When it is determined that the movement has been completed (Yes), the processing is terminated (Step S707). When it is determined that the movement has not been completed (No), the processing returns to Step S702 to repeat the processing after Step S702.

### Embodiment 2

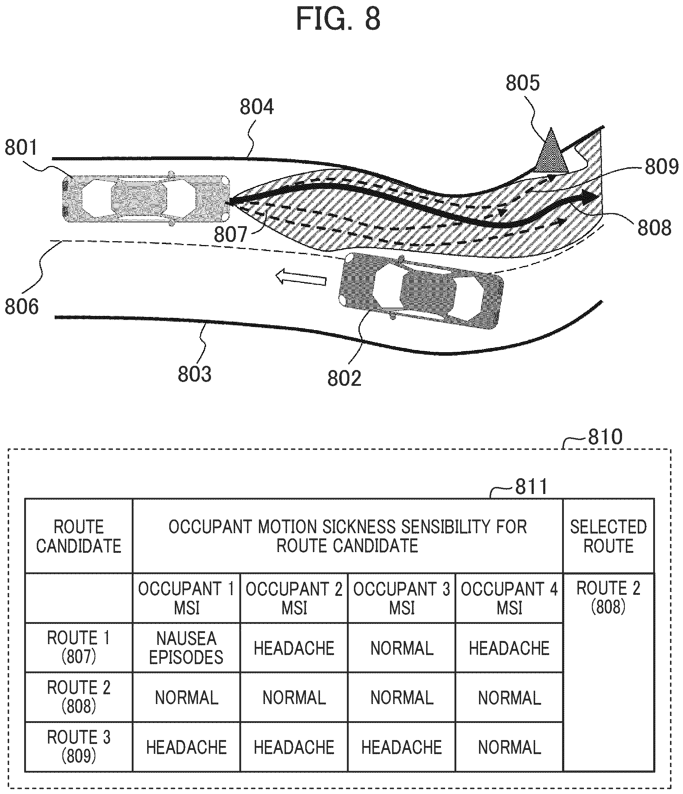

A vehicle integration control device and a vehicle integration control method according to the embodiment 2 of the present invention are described with reference to Fig. 8.

Fig. 8 is a diagram showing a driving scenario in which an own vehicle 801 carrying a plurality of occupants navigates until it reaches its destination.

In the driving scenario shown in Fig. 8, the own vehicle 801 needs to travel within a driving lane defined by lane boundaries 803, 804, and 806. Further, there is a possibility that an oncoming vehicle 802 is present, and the own vehicle 801 needs to avoid colliding with the oncoming vehicle 802 and an obstacle 805.

Therefore, the control target integration unit 302 of the present embodiment further includes a route planning unit 810 which plans the route of the own vehicle 801 to the destination.

The route planning unit 810 generates multiple route candidates 807 to 809 based on motion sickness sensibilities of multiple occupants. Further, the route planning unit 810 checks the feasibility of all route candidates related to the motion sickness sensibility of each occupant and outputs feasible route candidates as a route candidate table 811. Then, the route planning unit 810 selects the route which minimizes the motion sickness sensibilities (motion sickness incidences: MSIs) of the multiple occupants. In the example of the route candidate table 811 of Fig. 8, the route candidate 808 becomes the route which minimizes the motion sickness sensibilities (MSIs) of the multiple occupants.

The vehicle motion control unit 303 navigates the own vehicle 801 according to the selected route candidate 808 until it reaches the destination while controlling the posture of the vehicle so that the 6-axis momentum of the vehicle (roll rate, pitch rate, yaw rate, longitudinal acceleration, horizontal acceleration, and vertical acceleration) is minimized.

### Embodiment 3

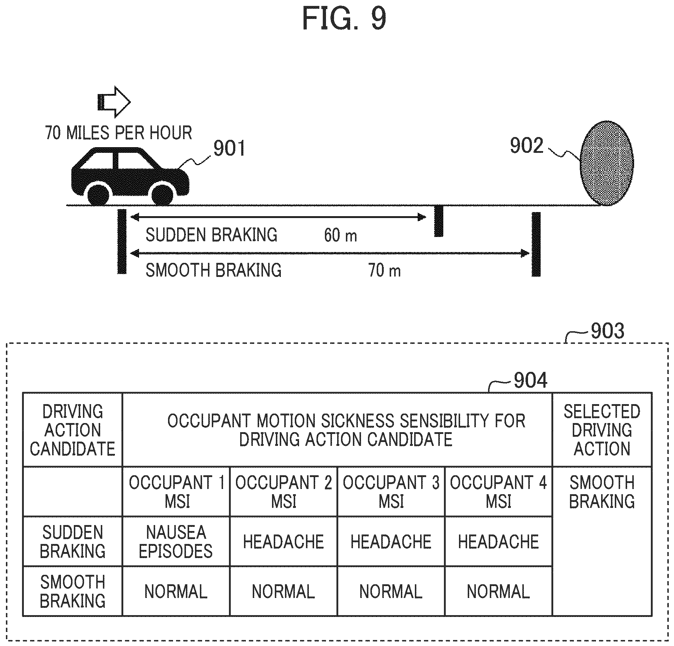

A vehicle integration control device and a vehicle integration control method according to the embodiment 3 of the present invention are described with reference to Fig. 9.

Fig. 9 is a diagram showing a driving scenario in which a driving action is selected based on motion sickness sensibilities of a plurality of occupants.

In the driving scenario shown in Fig. 9, an own vehicle 901 must stop in front of an obstacle 902 by braking. For example, when the own vehicle 901 is traveling at 70 miles per hour and tries to stop in front of the obstacle 902, a driving action of stopping at a braking distance of 60 m by sudden braking and a driving action of stopping at a braking distance of 70 m by smooth braking, etc. are conceivable. Vehicle motions like braking influence the onset of the occupant motion sickness.

Therefore, the control target integration unit 302 of the present embodiment further includes a driving action selection unit 903 which selects the driving action of the own vehicle 901.

The driving action selection unit 903 generates a plurality of driving action candidates based on the motion sickness sensibilities of the multiple occupants. Further, the driving action selection unit 903 checks the feasibility of all driving action candidates related to each occupant motion sickness sensibility and outputs the feasible driving action candidates as a driving action selection table 904. Then, the driving action that minimizes the motion sickness sensibilities (motion sickness incidences: MSIs) of the multiple occupants is selected. In the example of the driving action selection table 904 of Fig. 9, smooth braking becomes the driving action that minimizes the motion sickness sensibilities (MSIs) of the multiple occupants.

The vehicle motion control unit 303 stops the own vehicle 901 in front of the obstacle 902 by the selected smooth braking while controlling the posture angle of the vehicle so that the 6-axis momentum of the vehicle (roll rate, pitch rate, yaw rate, longitudinal acceleration, horizontal acceleration, and vertical acceleration) is minimized.

### Embodiment 4

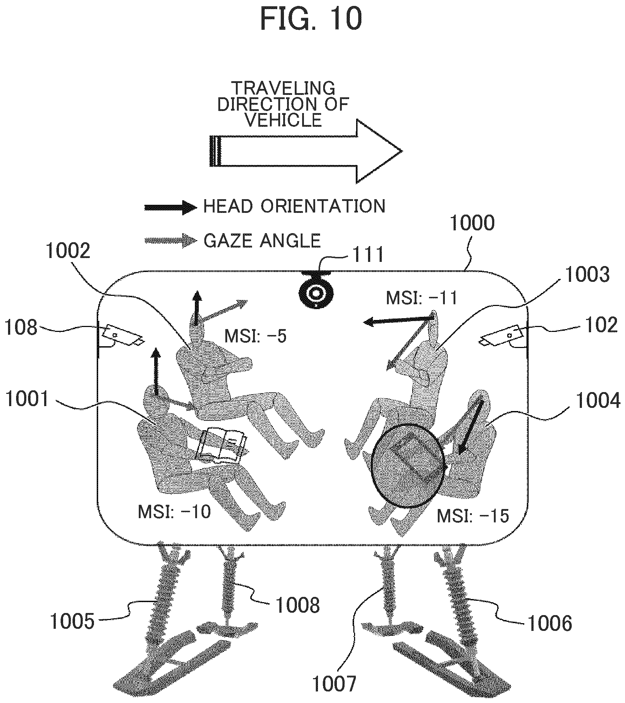

A vehicle integration control device and a vehicle integration control method according to the embodiment 4 of the present invention are described with reference to Fig. 10.

Fig. 10 is a diagram showing the manner in which a plurality of occupants 1001 to 1004 are performing various activities (tasks) unrelated to driving actions. Similarly to the embodiment 1 (Fig. 2), all the occupants are assigned a motion sickness sensibility index (motion sickness incidence: MSI) as the motion sickness sensibility.

In the example of Fig. 10, the occupant 1004 with the highest absolute value of MSI is considered to be most likely to develop the motion sickness.

Therefore, in the present embodiment, the vehicle motion control unit 303 operates an active suspension 1006 of active suspensions 1005 to 1008, which is close to the occupant 1004 most likely to develop the motion sickness to locally reduce the shaking acting on the occupant 1004, and thereby reduces the likelihood of the occupant 1004 developing the motion sickness.

### Embodiment 5

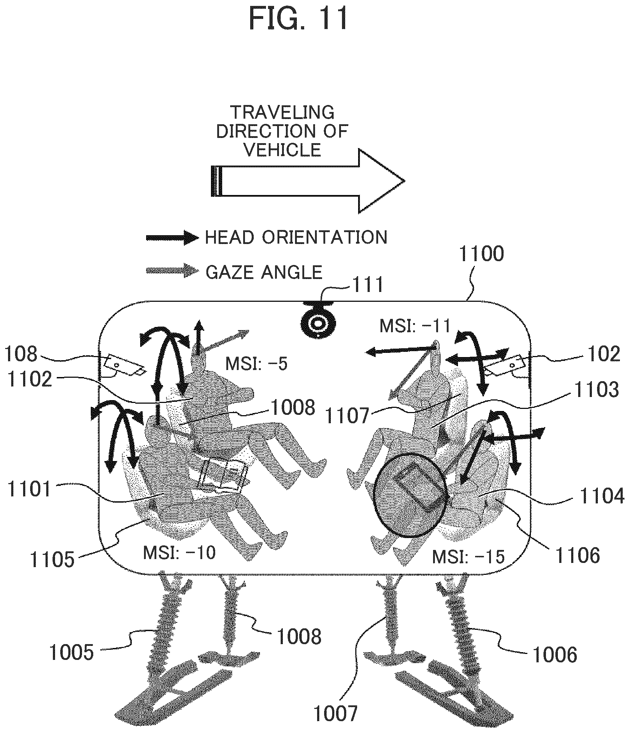

A vehicle integration control device and a vehicle integration control method according to the embodiment 5 of the present invention are described with reference to Fig. 11.

Fig. 11 is a diagram showing the manner in which a plurality of occupants 1101 to 1104 are performing various activities (tasks) unrelated to driving actions. Similarly to the embodiment 1 (Fig. 2), all the occupants are assigned a motion sickness sensibility index (motion sickness incidence: MSI) as the motion sickness sensibility.

In the embodiment 4 (Fig. 10), the shaking acting on the occupant 1004 is locally reduced by activating the active suspension 1006 close to the occupant 1004 who is most likely to develop the motion sickness. However, in the present embodiment, in addition to the activation of the active suspension 1006, the active seats 1105 to 1108 can also be further used to change the posture of the occupant.

Therefore, the active suspension 1006 close to the occupant 1104 is operated for the occupant 1104 who is most likely to develop the motion sickness, and the active seat 1106 on which the occupant 1104 is seated is operated to change the posture of the occupant 1104, thereby further reducing the influence of the motion sickness on the occupant 1104.

Thus, the possibility of the occupant 1104 developing the motion sickness can be reduced without affecting the other occupants 1101 to 1103.

### Embodiment 6

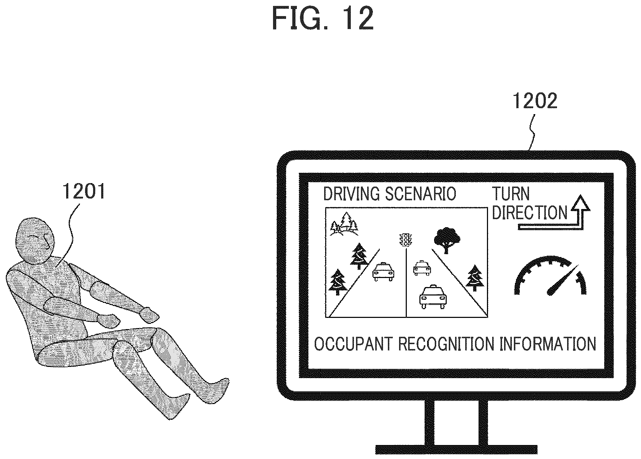

A vehicle integration control device and a vehicle integration control method according to the embodiment 6 of the present invention are described with reference to Fig. 12.

Fig. 12 is a diagram showing an occupant 1201 unrelated to a driving action and an on-vehicle monitor 1202 for reducing motion sickness sensibility.

Depending on the contents of the activities of the occupants and the conditions of the vehicle, the occupant 1201 may not be able to look outside to perceive the motion of the vehicle. Under such circumstances, it is feared that the unexpected vehicle motion increases the motion sickness sensibility of the occupant 1201 and makes the occupant more likely to develop the motion sickness.

Therefore, in the present embodiment, the motion of the vehicle estimated as the driving scenario of the vehicle is displayed on the on-vehicle monitor 1202 in order to cause the occupant 1201 to recognize the future motion of the vehicle.

The occupant 1201 can take a posture in preparation for the future vehicle motion by confirming the vehicle driving scenario and future vehicle motion displayed on the on-vehicle monitor 1202. Thus, it is possible to reduce the possibility that the occupant 1201 will develop the motion sickness.

In addition to the on-vehicle monitor 1202, for example, an audio signal may be used to allow the occupant 1201 to more accurately predict the motion of the vehicle.

Note that when the vehicle is a private vehicle which is regularly used by a specific occupant, the multiple-occupants monitoring unit 301 can also learn the regular action of the occupant. In this case, the control target integration unit 302 uses occupant behavior data related to a particular vehicle motion to generate a correlation function for presetting a vehicle driving mode. Based on the correlation function, the vehicle motion control unit 303 can control the vehicle motion so as to suppress the influence of the motion sickness on the occupant.

Also, the control target integration unit 302 may use the recorded travel time history of the occupant to determine the control target.

Further, the vehicle motion control unit 303 can easily switch various operation modes. When the normally used occupant is using the vehicle, the vehicle motion control unit 303 can also preset the vehicle motion.

In addition, in the case of a new occupant or an occupant for which no prior history is available, the control target integration unit 302 operates in a normal mode to predict the motion sickness sensibility of each occupant and estimate a control target for deriving the vehicle motion.

Furthermore, based on the control target, the vehicle motion control unit 303 may warn the occupant most likely to develop the motion sickness before the occupant develops the motion sickness.

It should be noted that the present invention is not limited to the embodiments described above, and includes various modification examples. For example, the embodiments described above have been described in detail to simply describe the present invention, and are not necessarily required to include all the described configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### Reference Signs List

100, 200, 1000, 1100 vehicle, 101, 103, 107, 109 seat, 102, 108, 111, 301, 501 multiple-occupants monitoring unit, 104, 105, 106, 110, 201, 202, 203, 204, 1001, 1002, 1003, 1004, 1101, 1102, 1103, 1104, 1201 occupant, 112 headphone, 113 smartphone, 114 portable tablet, 115 book, 302 control target integration unit, 303 vehicle motion control unit, 304 occupant posture/activity determination unit, 305 head movement determination unit, 306 vehicle motion determination unit, 307, 505 motion sickness prediction unit, 308 motion sickness sensibility index output unit, 309 control object, 310 actuator input, 311 motion sickness prediction, 312 6-degree-of-freedom moving amount control unit, 313 various integrated control objects, 401 occupant activity monitoring sensor, 402 on-board vehicle motion sensor, 403, 407, 510 information such as occupant activity/head movement/gaze angle, 404, 406 HMI input, 405 occupant posture and eye tracking sensor, 500 motion sickness sensibility prediction algorithm, 502 6-degree-of-freedom vehicle motion, 503 vehicle motion acquisition unit, 504 vehicle motion perceived by occupant, 506 to 509 motion sickness sensibility index, 511 to 514 occupant attribute, 801, 901 own vehicle, 802 oncoming vehicle, 803, 804, 806 lane boundary, 805, 902 obstacle, 807 to 809 route candidate, 810 route planning unit, 811 route candidate table, 903 driving action selection unit, 904 driving action selection table, 1005 to 1008 active suspension, 1105 to 1108 active seat, 1202 on-vehicle monitor.

## Claims

1. A vehicle integration control device comprising:
an occupant monitoring unit which monitors a plurality of occupants;
a vehicle motion acquisition unit which acquires information about the current vehicle motion of a vehicle;
a motion sickness prediction unit which predicts individual sensibilities of the respective occupants to a motion sickness resulting from the motion of the vehicle, based on the result of occupant monitoring by the occupant monitoring unit and the information on the vehicle motion acquired by the vehicle motion acquisition unit;
a control target determination unit which integrates the motion sickness sensibilities of the respective occupants predicted by the motion sickness prediction unit and determines a control target based on a result of the integration; and
a vehicle motion control unit which determines the contents of vehicle motion control based on the control target determined by the control target determination unit.

2. The vehicle integration control device according to claim 1, wherein
the vehicle motion control unit controls a posture angle of the vehicle so that a roll rate, a pitch rate, a yaw rate, longitudinal acceleration, horizontal acceleration, and vertical acceleration which are a 6-axis momentum of the vehicle are minimized.

3. The vehicle integration control device according to claim 1, wherein
the occupant monitoring unit includes one or more sensors, and
detects at least any of occupant activity, a line of sight, a gaze angle, a head movement, a head orientation, a posture, a seat orientation, and a vehicle interior configuration.

4. The vehicle integration control device according to claim 1, wherein
the control target determination unit selects the motion sickness sensibility of the occupant with the worst motion sickness sensibility predicted by the motion sickness prediction unit, and determines a control target based on the selected motion sickness sensibility.

5. The vehicle integration control device according to claim 1, wherein
the control target determination unit averages the motion sickness sensibilities of the respective occupants predicted by the motion sickness prediction unit, and determines a control targe based on the averaged motion sickness sensibility.

6. The vehicle integration control device according to 1, including:
a human machine interface unit which inputs information about the occupants, wherein
the control target determination unit determines a control target based on the information input from the human machine interface unit.

7. The vehicle integration control device according to claim 1, wherein
the control target determination unit selects and integrates at least one of collision safety or a travel time in addition to the motion sickness sensibility of each occupant predicted by the motion sickness prediction unit, to determine the control target.

8. The vehicle integration control device according to claim 1, wherein
the control target determination unit determines the control target using a recorded occupant travel time history.

9. The vehicle integration control device according to claim 1, wherein
the vehicle motion control unit selects a driving mode including at least one of a lane change driving mode, an autonomous lane maintenance driving mode, adaptive cruise control, a traffic congestion driving mode, or a highway driving mode, based on the control target.

10. The vehicle integration control device according to claim 1, wherein
the vehicle motion control unit operates, based on the control target, an active suspension in the vicinity of the occupant who is most likely to develop a motion sickness or an active seat on which the occupant is seated, to reduce the possibility of developing the motion sickness in the occupant.

11. The vehicle integration control device according to claim 1, wherein
the vehicle motion control unit warns an occupant who is most likely to develop the motion sickness, before the occupant develops the motion sickness, based on the control target.

12. The vehicle integration control device according to claim 1, wherein
when a particular occupant regularly uses the vehicle, the occupant monitoring unit learns behavior of the occupant with respect to the motion of the vehicle,
the control target determination unit uses data about the learned occupant behavior to generate a correlation function for presetting a driving mode of the vehicle, and
the vehicle motion control unit controls the motion of the vehicle based on the correlation function.

13. The vehicle integration control device according to claim 1, including an on-vehicle monitor which displays a vehicle driving scenario and an estimated vehicle motion, or an audio output device which outputs the vehicle driving scenario and the estimated vehicle motion with an audio signal.

14. A vehicle integration control method comprising the following steps of:
(a) monitoring a plurality of occupants;
(b) acquiring information about a current vehicle motion of a vehicle;
(c) predicting each occupant individual sensibility to a motion sickness of each occupant resulting from a vehicle motion, based on the result of occupant monitoring in the step (a) and the information about the vehicle motion obtained in the step (b) ;
(d) integrating the motion sickness sensibilities of the respective occupants predicted in the step (c) and determining a control target based on the integrated result; and
(e) determining the contents of vehicle motion control, based on the control target determined in the step (d).

15. The vehicle integration control method according to claim 14, including the step of:
(f) based on the contents of the vehicle motion control determined in the step (e), controlling a posture angle of the vehicle so that a roll rate, a pitch rate, a yaw rate, longitudinal acceleration, horizontal acceleration, and vertical acceleration which are a 6-axis momentum of the vehicle are minimized.
